# Europäisches Patentamt

(19) **European Patent Office**

**Office européen des brevets**

(11) Publication number : **0 332 625 B1**

## EUROPEAN PATENT SPECIFICATION

(45) Date of publication of patent specification :
06.05.92 Bulletin 92/19

(51) Int. Cl.⁵ : **H04Q 11/04**

(21) Application number : **87907424.3**

(22) Date of filing : **03.11.87**

(86) International application number :
**PCT/EP87/00687**

(87) International publication number :
**WO 88/04123 02.06.88 Gazette 88/12**

(54) **DIGITAL TELEPHONE SWITCHING EXCHANGE, PARTICULARLY FOR PRIVATE SYSTEMS (PABX).**

(30) Priority : **26.11.86 IT 2245986**

(43) Date of publication of application :
20.09.89 Bulletin 89/38

(45) Publication of the grant of the patent :
06.05.92 Bulletin 92/19

(84) Designated Contracting States :
**AT BE CH DE FR GB LI NL SE**

(56) References cited :
EP-A- 0 135 342
EP-A- 0 193 134
DE-A- 3 346 806
FR-A- 2 590 101
US-A- 3 562 435
IEEE International Conference on Communications, 23-26 June 1985, Chicago, paper 27.2 (IEEE, New York, US), P. Tomsu et al.:"ITT 5200 BC5 digital, integrated voice and data communication system", pages 855-862
Mini-Micro Conference Record, May 1984, (New York, US), A. Mouton: "CMOS LSI integration enhances voice and data networks",paper 6/1, pages 1-9
Patent Abstracts of Japan, vol. 7, no. 129 (E-179)(1274), 4 June 1983, & JP, A, 5844842
Telcom Report, "Sonderheft", 1985 (Berlin, DE), J. Albath: "Integrierte Server des ISDN-Kommunikationssystems HICOM", pages76-83
IEEE Journal on Selected Areas in Communications, vol. SAC-3, no. 4,July 1985 (IEEE, New York, US), A. Feiner: "Architecture,design, and development of the system 75 office communications system", pages 522-530

(56) References cited :
**International Conference on Communications, 8-12 June 1980, Seattle, vol. 2, paper 19.5 (IEEE, New York, US), P.K. Desikan etal.: "A data switching technique for a digital PABX", pages 1-5**

(73) Proprietor : **ITALTEL TELEMATICA S.p.A.**
**Via Appia - località Cappuccini**
**I-81055 Santa Maria Capua Vetere (Caserta) (IT)**

(72) Inventor : **ESPOSITO, Antonio**
**Via Salerno, 2**
**I-81020 S. Nicola (IT)**
Inventor : **MARTUSCIELLO, Antonio**
**Via Perugia, 36**
**I-81020 S. Nicola (IT)**
Inventor : **MENNELLA, Salvatore**
**Via S. Cosma e Damiano**
**Residenz Park I-81020 S. Nicola (IT)**
Inventor : **RAVASIO, Piercarlo**
**Via dei Pini, 8**
**I-22050 Arlate di Calco (IT)**

(74) Representative : **Giustini, Delio**
**c/o Italtel Società Italiana Telecomunicazioni s.p.a. P.O. Box 10**
**I-20019 Settimo Milanese (MI) (IT)**

## Description

The invention relates to a digital telephone switching exchange, particularly fit for use in private telephone systems, which are known in the specific literature under the name of "PABX" (Private Automatic Branch Exchange).

Inside a company, etc., often besides the usual telephone network (which provides the connection of users belonging to said company), a data processing network is generally associated, which is mainly constituted by a processor to which, through coaxial cables, a plurality of terminals located at short or long distances from the main unit are connected.

The coming of the digital PABX has allowed a partial integration of the data processing and PABX network, due to their capacity to switch both voice and data signals.

In said systems, the PABX lines can be considered as "access circuits" to the system to which telephone sets, processing units, data terminals, etc. can be linked.

Digital PABX comprising a plurality of digital or analog interface units, central Control means connected to all interface units through a bidirectional control bus and a switching matrix, driven by the Control means and connected to all the interface units through a bidirectional data bus, different from the control one, are known in the art for example from the published European Patent Application No. 135.342 or from the article "ITT 5200 BCS - Digital Integrated voice and data communication system" of P. Tomsu et al - Conference Records of the IEEE International Conference of Communications, 23-26 June 1985, Chicago, pages 855 to 862.

It is to note that in said structures the processing unit is connected to the PABX by means of a telephone line, through which the signals are transmitted at a speed that usually is really lower than the operational speed of the processing unit. This means in effect an heavy limitation, as the restricted band width of the telephone lines does not allow the complete exploitation of the processor's capacity.

Purpose of the present invention is the realisation of a network which is not subject to said limitation, i.e. a structure capable of a total exploitation of the speed used by the modern processing units. Further purpose is to make the installation operations easier by separating therm from the troubles which may arise in connection with the wiring of such a system configuration and according to the requirements of the single customers.

To this end the PABX of the present invention is so composed as to allow a complete integration of the PABX and data processing network, by combining, in the same PABX structure, one or more data processing units which use a data processing operating system and functionally comparable to the unintegrated data processing units.

A digital system where a digital PABX and at least a data processing unit are integrated through a common bus is described, for example, by J. Albath "Integrierte Server des ISDN - Kommunicationssystems HICOM" - Telecom Report, 1985, Sonderheft, pages 76 to 83.

It is to remember that said integration means the overcoming of technical problems, particularly connected to the signals transmission mode, as a data processing system normally uses asynchronous transmission mode, while the digital telephone switching exchanges normally use synchronous transmission mode. These latter in particular are so structured as to be capable of switching PCM signals, i.e. signals issued according to the time sharing principle, while the processing units which use a data processing operating system are so structured as to accept at input a serial data flow which is not compatible with the PCM flow mentioned above.

The exchange of information between a data terminal and a processing unit means that the processing unit should know the condition of predetermined wires of the connector which provides the connection of said units. It is therefore necessary to work out the technical problem relative to the distance between the data termimal e the processing unit because, in order to cause no decrease in the useful information switched to the time unit, it is also necessary to avoid the use of key words which allow the identification of the digital words, referring to useful signal, from the digital words which refer to service information.

The present invention relates to a digital telephone switching exchange, particularly for private systems, which comprises:

– a plurality of line card units, to which telephone sets and/or data terminals, and/or trunks are connected, capable of sending/receiving on PCM highways the digital words pertaining to voice/data and the digital words relative to signalling tones; further capable of sending/receiving messages relative to signalling criteria on an interprocessor signalling channel;

– a switching matrix connected to said PCM highway and to a tone generator;

– a system master computer controlling the switching matrix according to the information included in the messages received over the interprocessor signalling channel;

– at least, a data processing unit which uses a data processing operating system and is connected to said PCM highways and to a global bus, which is further linked to the system master computer;

Purpose of the present invention are PCM interface means - in quantity at least equal to the number of said data processing units - capable of extracting, respectively inserting, from/in said PCM highways the digital words to be sent, respectively coming from, the data processing unit to which they are associated and capable of reconstructing a data flow at the speed averaged between the speed of data terminal, to which they are coming from, and that of the PCM signals.

In this connection the data processing unit is directly connected to the PCM highways - by means of said PCM interface - and it results therefore integrated in the PABX structure in such a way that no "restrictions" are generated, which may cause the limitations mentioned above.

The PCM interface means are so structured as to be capable of reconstructing a continuous data flow and the data processing unit operates as if the data terminals were directly joined to its input/output gates.

Further characteristic of the invention can be taken from the below description which refers to a non-limiting example shown in the following drawings, whereas:

– Figure 1 shows the units necessary to the handling of telephone procedures (basic PABX structure) in a know telephone switching exchange;
– Figure 2 shows the telephone switching exchange of Fig. 1 with the associated data processing units (extended PABX structure) and PCM-I interfaces according to the invention;
– Figure 3 shows the allocation of a digital word in a PCM stream, which is generated by an asynchronous data terminal;
– Figure 4 shows, by way of example, how the PCM-I interface of Fig. 2 works;
– Figure 5 shows in detail the PCM-I interface of Fig. 4;

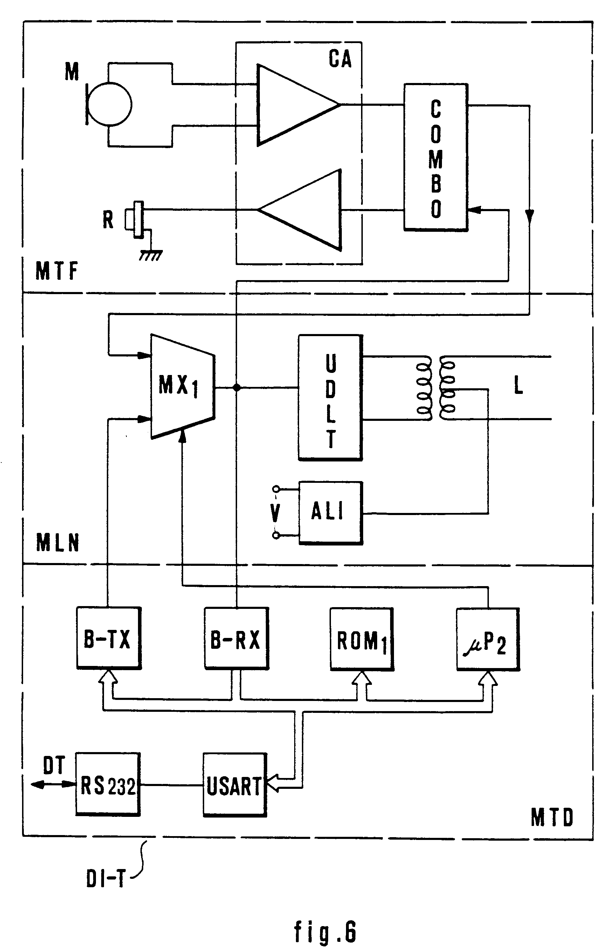

– Figure 6 shows the block diagram of a digital telephone set DI-T of Fig. 1;
– Figure 7 shows the block diagram of a digital line card D-LC as well as how it is connected to the system master computer SMC;
– Figure 8 shows the block diagram of an analog line card A-LC;
– Figure 9 shows the switching matrix SMX of Fig. 1 with the associated distribution means DIFA;
– Figure 10 shows in detail the distribution means DIFA under Fig. 9.

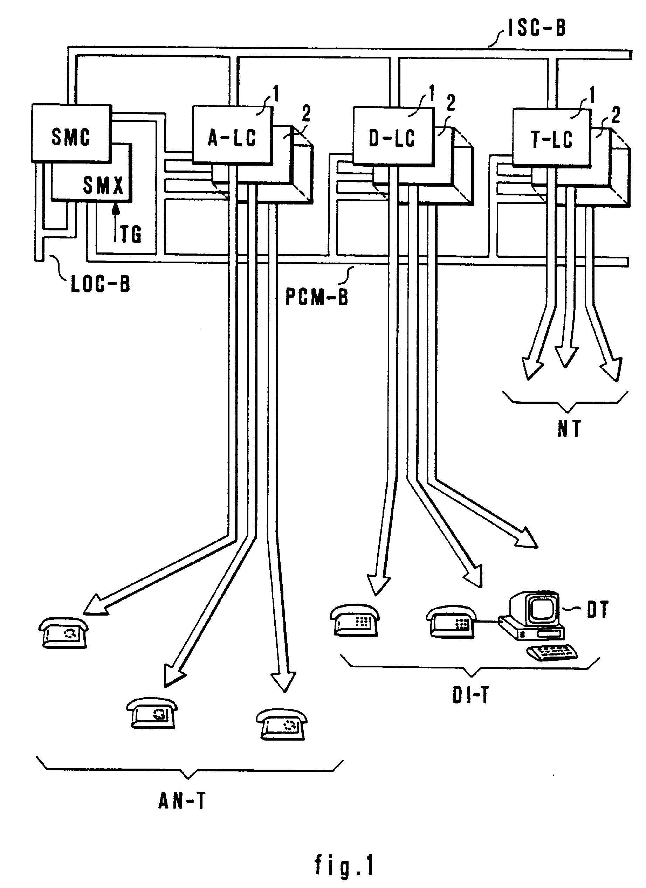

The block diagram of a know telephone switching exchange is shown in Fig. 1, where the data processing units are excluded and only the units which handle the telephone procedures are illustrated.

In particular said basic PABX structure includes:
– a set of analog line cards A-LC, to which analogic-type telephone sets AN-T are connected;
– a set of digital line cards D-LC, to which digital-type telephone sets DI-T and/or data terminals DT are connected;
– a set of trunk line cards T-LC, to which, trunks directed to other switching systems NT (e.g. central office) are connected;

– a switching matrix SMX capable of performing the switching of PCM signals;
– PCM highways PCM-B which allows the exchange, in PCM signals, of both the voice and data signals among the units mentioned above;
– an interprocessor signalling channel ISC-B bus designated to allow the serial transmission of messages pertaining signalling criteria among the above units and a system master computer SMC;
– the system master computer SMC suitable to control the operation of a switching matrix over a local bus LOC-B, according to the indication included in the messages received over the ISC-B bus.

The operation of the circuit structure mentioned above is hereafter described.

The telephone criteria relative to the users (such as calling signal, pulsing signal, etc.) are detected by the line card units A-LC and D-LC, which are suitable to release a message which identifies the calling user, the called user, etc.

The message is sent in serial transmission over the ISC-B bus to the system master computer SMC which, once received the connection request, assigns two free phases in the switching matrix SMX and sends to this latter over the local bus LOC-B the corresponding control signals.

The unit SMX provides therefore the connection between the time-slot associated to the calling gate and the time-slot associated to the called gate and from this moment on the calling and the called user may exchange signals over the PCM-B bus and the unit SMX.

When one of the two users replaces the receiver, the operation is detected by the line card LC, to which the receiver is connected and this line card provides the forwarding of the message over the ISC-B bus to the system master computer SMC, which arranges the release of the switching phases in the unit SMX.

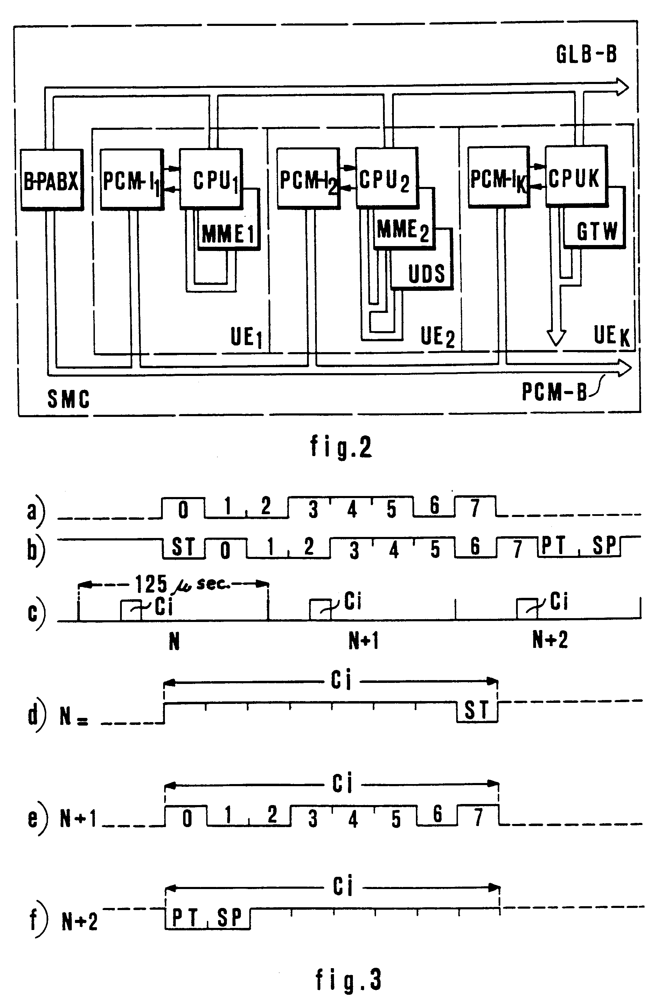

In Fig. 2, B-PABX means the basic PABX structure of Fig. 1, that is the units which handle the telephone procedures.

The data processing procedures are handled by a plurality of data processing units $UE_1$ .... $UE_K$ which use a data processing operating system, being each of said units capable of performing predetermined data processing operation, according to the invention.

By way of example it is illustrated a unit $UE_1$ suitable for the storing of audio messages for telephone answering machines, for the sending of messages to a plurality of users, etc.

To this end the unit $UE_1$ includes a unit $CPU_1$ (Central Processor Unit) to which a set of memory units $MME_1$ is connected.

It is further illustrated a unit $UE_2$ including a unit $CPU_2$, a set of memory units $MME_2$ and a disk driver unit UDS. If the unit $CPU_2$ is equipped with adequate

programs, the processor $UE_2$ can provide :or example word processing procedures to which any user connected to the PABX, over relative terminals may have access.

It is further illustrated a unit $UE_K$ comprising a unit $CPU_K$, to which a set of gateways GTW is associated, suitable for the performing of the connection among the PABX unit and the data transmission networks, such as packet switching systems, etc.

As shown in Fig. 2, PCM interface means PCM-I are associated to each CPU unit and they allow the connection of a corresponding processing unit UE, using a data processing operating system, to the PCM-B bus mentioned above.

The technical problem involved in the present invention arises from the fact that in the data processing operating systems the transmission of characters between the data terminal and the corresponding processor is performed according to asynchronous procedure, i.e. over serial transmission channels and interface units, standardized-type (known in the specific technique under the reference RS 232). Said procedure provides the issuing of information bit associated to a start, stop and if necessary a parity bit. If the information bits reach the number of 8 bits, the digital words in said asynchronous systems are constituted by 11 bits.

The digital telephone switching exchanges are synchronous-type systems and capable of sending PCM signals, i.e. 8 bit signals arranged according to a frame having a 125 μ sec. duration and inxluding 32 time-slots.

The technical problem of the present invention is therefore the performing of an asynchronous-type transmission by using a synchronous-type transmission as well as the reconstruction at the input of each processing unit of one or more serial data flows as if the terminal were directly connected to the processing unit.

As far as the terminal goes, said technical problem may be solved through the use of a digital telephone set suitable for working according to the procedure hereafter described and, as far as the processing unit goes, through the PCM interface means PCM-I.

Each digital telephone set is so structured as to be capable of:
– inserting, in the assigned time slots, bits having a fixed logic value (for example, having logic level ONE) for all the time the corresponding data terminal DT does not present any digital word at the input;
– interrupting the generation of said fixed logic value in any temporal position (within the eight infinitesimal time intervals in which the time slot is divided) receives a word coming from the data terminal (11 bits) at the input;
– starting the issuing of 11 bits at the moment actually considered, allocating them in two (or three) time slots corresponding to as many consecutive frames;
– re-starting the issuing of said fixed logic value when the data terminal has no other words to send, once the eleventh bit has been released;
– issuing the wires condition of said interface unit RS 232 to said processing unit at predetermined time intervals.

Figure 3 illustrates the temporal diagrams which clarify what above stated. In particular the diagram a) shows a 8-bit digital word pertaining therefore a word that can be switched to the digital exchanges.

Diagram b) shows the same digital word issued by an asynchronous-type data terminal and therefore equipped with the start bit ST, the parity bit PT and the stop bit SP. Diagram c) shows in reduced scale the PCM frames N, N + 1, N + 2 in order to evidence how the word of diagram b) can be transmitted over a synchronous-type system.

Diagrams d), e) and f) show the content of the time slot Ci, (referring to frames N, N+1, N+2), assuming that the start bit ST reaches the eighth infinitesimal time interval of the frame N°. In this case the character transmission ends when it reaches the frame N + 2 and in particular in the second infinitesimal time interval, where the stop bit SP is forwarded. In other cases the generation of the 11 bits ends after two consecutive frames.

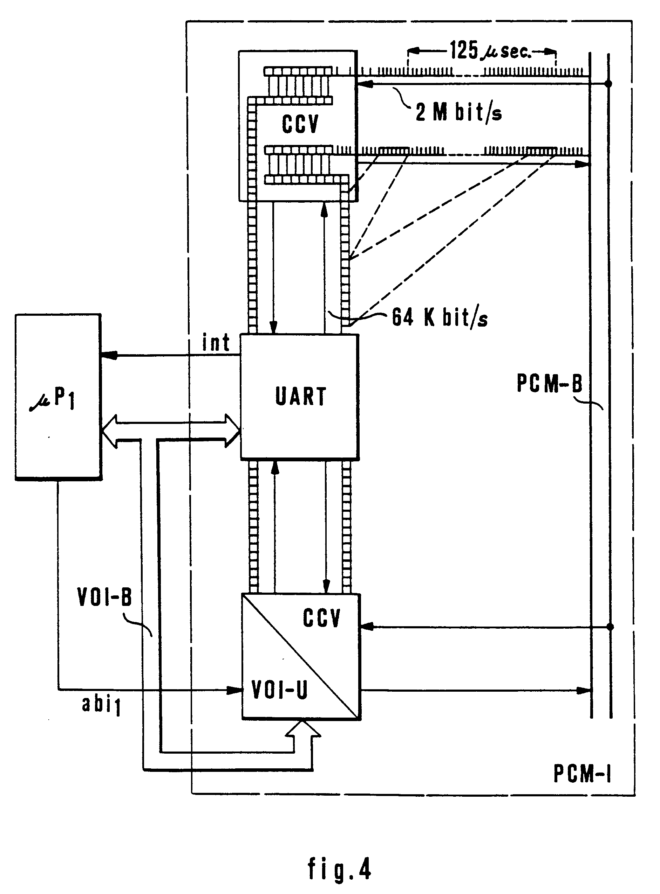

Figure 4 shows symbolically some PCM-I units in order to better clarify the operation procedure.In particular said units include a CCV speed converter circuit to which the bidirectional PCM stream is sent.

Considered that the PCM flow presents a 2M bit/s speed and that the speed of data information generated by the unit $\mu P_1$ is equal to the speed of data information generated by remote data terminale, it results that said PCM-L means are so structured as to perform an extraction operation of channels PCM as well as a speed conversion, by sending to a unit UART (Universal Asynchronous Receiver Transmitter) a data flow at 64 K bit/s which constitutes an average speed between the PCM flow and the data terminal speed, that often reaches a value between 300 and 19.200 bauds.

This is a situation similar to the situation obtained when the data terminal is directly connected to the unit UART.

Assumed in particular that the bits corresponding to any of the data terminals are allocated in a predetermined time slot (e.g. time slot n) in the PCM frame, once said time slot of the frame $T_n$ reaches the input of circuits CCV, the bits there positioned are stored and transferred in parallel to a register which receives a 64 K bit/s clock. During the time interval of a frame (125 μsec.), that corresponds to the time elapsed during the reception of two consecutive time slot, the register's content is sent to the output and when the last bit is sending out, the storing of the content of another PCM channels is registered.

Following the instructions mentioned above, even the content of said time slot of the frame $T_{n+1}$ is transferred to the channel at 64 K bit/s, as to assure a continuity of the data information flow. It is to remember that said continuity should be reached without causing overlap which involves a bit distortion, particularly dangerous during a data transmission.

When the start bit of each word reaches the unit UART, this sends an interruption request int to a microprocessor $\mu P_1$ and further provides the elimination of the start, stop and parity bit as well as the storing of the eight bits obtained through the above operation into a buffer memory. The unit $\mu P_1$ can use a time interval of 125 $\mu$ sec. for the extraction in parallel of said word, allowing the storage of the subsequent word into said unit UART. The other transmission direction requires a dual operation, as the microprocessor transfers 8 bits words to the unit UART in parallel, this latter provides the combination of said word with the start, stop and parity bit, as well as the sending out of the word obtained on the serial channel at 64 K bit/s in any moment and not according to the PCM signals. The serial channel is joined to said CCV speed converter circuit which with operation, such as:

    – storage into a register at a speed of 64 K bit/s,
    – transfer in parallel of the digital word to an additional register,
    – reading of said register at a speed of 2 M bit/s, provides the allocation of the digital word in a predetermined time slot of two or three consecutive frames.

Should be the transfer of digital words not effected, the bits having a fixed polarity are sent to the 64 K bit/s channel and the generation of said polarity is interrupted when it is necessary to transfer a digital word.

In some applications (such as the sending of voice signals to the digital telephone set DI-T from the unit $\mu P_1$, for example for the implementation of the telephone answering service) it is requested the sending to the PCM bus of digital words at 8 bits instead of 11 bits, as above said.

As said transmission mode corresponds to a typical transmission in a PCM system, it is therefore possible the transmission of a byte for each PCM frame (it is not convenient the performing of the operation instructions above described and relative to Fig.3, as in this case the sending of a byte may require a maximum of three frames).

In order to optimize the transmission speed of said vocal signals, the present invention provides a vocal unit VOI-U which, when receives a signal $\underline{abi}_1$, it stores the bytes and allocates them into the assigned time slot.

A CCV speed converter circuit is associated to a unit VOI-U and it is able to exchange signals with the unit UART, in order to alllow the transmission of asynchronous words when the transmission of voice signals is not requested.

The diagram shown in Fig. 4 represents a structure where the unit $\mu P_1$ handles simultaneously two procedures. By increasing the number of circuits CCV and UART it is possible to increase the numbers of the procedures which may be handled simultaneously.

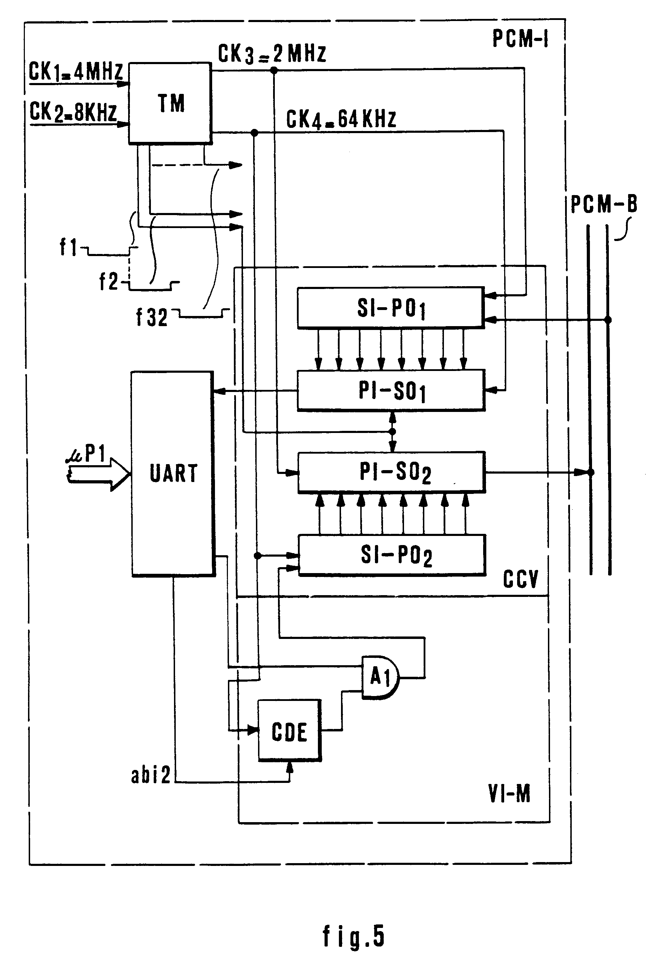

Fig. 5 shows in detail the unit PCM-I, which includes a timer TM suitable to receive at its input a 4 MHz clock $CK_1$ and a 8 KHz clock $CK_2$. The unit TM can further release at its oputput a clock $CK_3$ having a 2 Mhz frequency, which corresponds to the frequency of the PCM signals, and a clock $CK_4$ with a 64 Khz frequency, which corresponds to the frequency of the signals coming from UART. 32 time signals $f_1....f_{32}$ are further available at the TM output, each one having the same duration of a time slot of the PCM flow (4 $\mu$ sec. about).

In the case that the PCM channel to be extracted/inserted is the channel number 1, the time signal $f_1$ is sent to the CCV speed converter along with the signals $CK_3$ and $CK_4$.

The unit CCV includes a shift register type "Serial In-Parallel Out" $SI-PO_1$, which receives at input a 2 MBit/s PCM flow as well as the clock signal $CK_3$; as far as the slope edge of signal $f_1$ occurs, the content of register $SI-PO_1$ is transferred in parallel to the register type "Parallel In-Serial Out" $PI-SO_1$.

Said register receives at input the $CK_4$ clock and releases therefore at output a data flow at 64 K bit/s which reaches the UART unit. In the other transmission direction the UART unit present at output a data flow at 64 K Bit/s, which reaches the input of a second register $SI-PO_2$, suitable further to receive at input the clock $CK_4$.

When the leading edge of the signal $f_1$ occurs, the content of the register $SI-PO_2$ is transferred to a second register $PI-SO_2$. Said unit can further receive at input the clock $CK_3$ and has the output connected to the PCM bus (high ways PCM-B).

The $CK_3$ pulses which follow the leading edge of $f_1$ causes the insertion of a data flow at 64 K Bit/s generated by the UART unit in a 2 M Bit/s data flow.

The UART unit is therefore suitable to exchange a serial data flow at 64 K Bit/s with the CCV unit, as well as to send to said microprocessor $\mu P_1$ an interruption request in response to the receipt of a digital word.

The transfer of said digital words from the UART unit to the $\mu P_1$ unit is performed in parallel over the bus of the same $\mu P_1$ unit. This latter can handle the message transfer protocol with said digital telephone set DI-T according to what specified above and shown in Fig. 3. In particular, when the PCM-I unit does not receive words from the CPU unit, to which it is associated, the unit $\mu P_1$ sends to the UART bits having a fixed logic value. When the CPU unit generates a digital word, the unit $\mu P_1$ interrupts the sending of said polarity and starts the sending of said word.

Considered that the information exchange between a data terminal and a data processing unit requires that the data processing unit knows the condition of predetermined wires of the connector which provides the linking among the said units and being the data terminal DT remote located in respect to the unit $\mu P_1$, it is therefore necessary the transfer of the information about the condition of said connector's wires.

The DT and the $\mu P_1$ unit may therefore exchange real data and service information such as the ones mentioned above.

In order to avoid the transmission of bytes which could define the digital words as real data, i.e. as service information, the invention is so structured as to insert a violation into the "stop" bit polarity every time that a transmission of a digital word pertaining said service information is required. More in particular, as a digital word which refers to real data presents the following pattern:

.... STOP - STOP - START - BIT1 - BIT2 - BIT3 - BIT4 - BIT5 - BIT6 - BIT7 - BIT8 - PARITY - STOP - STOP ...., while the digital word pertaining service information is transmitted according to the following pattern:

STOP - START - BIT1 - BIT2 - BIT3 - BIT4 - BIT5 - BIT6 - BIT7 - BIT8 -PARITY - START - STOP - STOP....where the stop bit which follows the parity bit results to be violated, as it assumes the polarity of the start bit.

As the transmission of said service words is bidirectional, the invention requires violating means VI-M, having the output connected to the UART unit associated to the unit $\mu P_1$ as well as to the unit UART associated to the unit DT (the VI-M means are shown only in Fig. 5 and are suitable to perform the operation required above). The VI-M means include a counting and a decoding circuit CDE, which receives the clock $CK_4$ at the input and is so formed as to allow the actuation of its own output at the counting step 11 when it receives a qualification signal $\underline{abi_2}$ from the unit $\mu P_1$.

An AND circuit $A_1$, which further receives at input the output of unit UART, is connected to the unit CDE. When the unit $\mu P1$ has to transmit a service information, it actuates the output $\underline{abi_2}$ which modifies the logical level of the signal applied to one of the input of the unit $A_1$ when the eleventh bit of a digital word is registered on the other input.

The polarity of the STOP bit is therefore inverted.

When the remote unit UART receives such a word, it signals the error in the word received and the unit $\mu P$, associated to the unit UART, accept said error signal as a service word.

It is evident that, according to the invention, the PCM-I interface simulate a direct connection between the unit DT and the remote unit $\mu P$.

Fig. 5 shows the block diagram of a digital telephone set DI-T, which is connected to line L by means of a transformer TRA suitable for the performance of the galvanic decoupling between said line L and the circuits of the unit DI-T.

A power supply ALI is connected to the primary winding of the unit TRA and it is suitable to take the supply voltage V from the line L and use it for the feeding of the above circuits from the line L. A circuit known as UDLT (Universal Digital loop Transreceiver) is connected to the secondary winding of the unit TRA and it is suitable to perform a bidirectional transmission between the unit DI-T and the corresponding line card D-LC. In particular, within a time interval having a predetermined duration (for example, 125 $\mu$ sec.), the unit UDLT uses a first time portion (for example, 40 $\mu$ sec.) for the transmission operation and the second time portion (for example, 40 $\mu$ sec.) for the receiving operation.

In addition to the line means MLN, the digital telephone set includes voice processing means MTF and data processing means MTD. The voice processing means MTF include a microphone M, a receiver R, amplification circuits CA and a circuit know in the technique as COMBO, which includes analog/digital, digital/analog conversion circuits and filtering circuits for the reconstruction of the analog signal.

The data processing means are constituted by a serial interface RS 232, to which a data terminal DT, at one side, and a unit USART (Universal Synchronous Asynchronous Receiver Transmitter), on the other side, are connected; said interface is suitable for handling a bidirectional transmission of both synchronous and asynchronous data generated by a unit DT.

A bus which is further joined to a transmission buffer B-TX and to a receiving buffer B-RX is connected to the unit USART.

In particular, the unit B-RX provides the storing of the data coming from the line 1, while the unit B-TX provides the storing of data to be forwarded to the line 1. The buffer B-TX is connected to the unit UDLT by the multiplexer $MX_1$, which receives the output of said unit COMBO the the other input.

The multiplexer $MX_1$ is controlled by a microprocessor $\mu P_2$, which uses the software stored into a Read Only Memory $ROM_1$ for the transmission of asynchronous words according to the message transfer protocol described above in Fig. 3.

As the unit DI-T provides a data or audio signal transmission, the unit $\mu P_2$ controls the unit $MX_1$ in order to send the output of the unit COMBO or the output of the buffer B-TX to the unit UDLT.

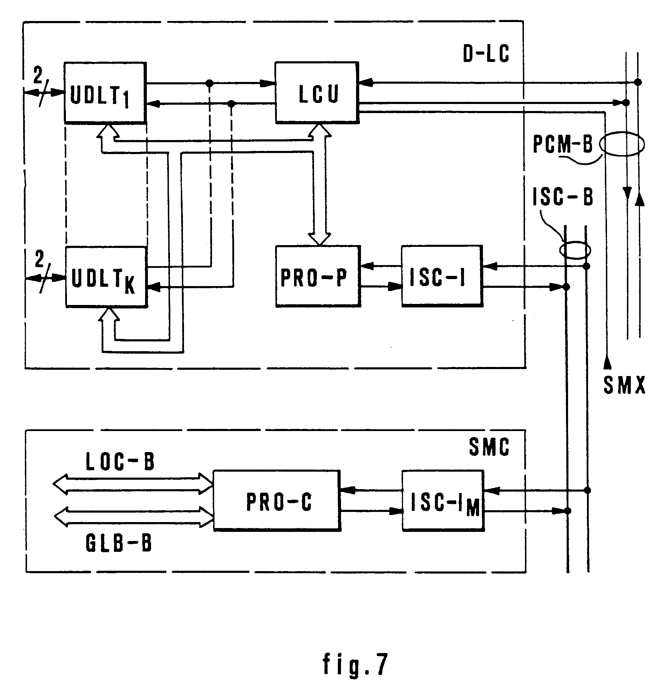

Fig. 7 shows the block diagram of a set of digital line card D-LC which includes:

  – K units UDLT suitable for the interaction with as many units UDLT inserted in the digital telephone sets DI-T, as previously described referring to Fig. 5. Said units are so structured as to be capable of separating the voice/data bits from the signalling bits;

– a unit LCU (Local Communication Unit) which, controlled by a line card processor PRO-P, exchanges digital words referring to audio/data signals with the unit UDLT, allocates/extracts said words into the time slot of the PCM-B bus, sends to the unit UDLT, digital words referring signalling received from said switching matrix SMX by a particular PCM highway of PCM-B bus;

– the line card processor PRO-P, suitable to receive, respectively forward, from said units UDLT digital words referring signalling, to exchange said words with a signalling interface ISC-I, to control the operation performed by the unit LCU;

– a signalling interface ISC-I suitable to form the words referring to signalling and which are generated as messages from the unit PRO-P, to forward, respectively to receive, said messages to the interprocessor signalling channel ISC-B bus.

The voice/data bits are sent to the switching matrix SMX by the unit LCU and the PCM-B bus.

The signalling bits are transmitted to the system master computer SMC by the line card processor PRO-P, the interface ISC-I and the ISC-B bus.

The system master computer SMC includes:

– an interface signalling unit ISC-I$_M$, which operates as master unit in respect to the units ISC-I allocated in every line card LC, so structured as to exchange the signalling messages with said units;

– a central processor PRO-C, able to exchange with said unit ISC-I$_M$ digital words which pertain signalling criteria, able to control the switching matrix SMX - over the local bus LOC-B - according to said criteria, connecting the calling user with the called user by the PCM-B bus. The information exchange with the data processing units UE is performed through said global bus GLB-B, which is connected to the central processor PRO-C.

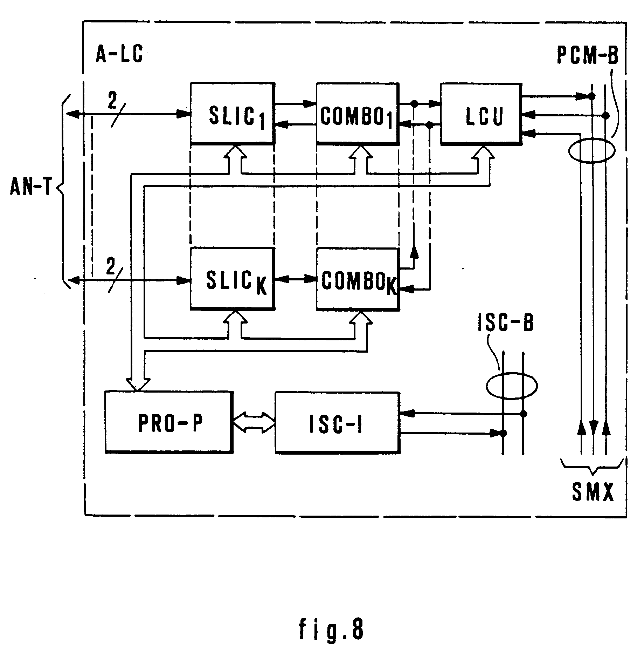

Fig. 8 shows the block diagram of an analogic line card A-LC, which includes:

– K SLIC units (Subscriber Line Interface Circuit) suitable for the connection to as many analogic telephone lines, for the forwarding of the calling signal and of the supply current to the corresponding line and further suitable for the information about the line condition;

– k converters, known in the technique as COMBO, suitable to perform the analogic/digital - digital/analogic conversion of the incoming signals;

– a local Communication Unit LCU suitable for the exchanging digital words regarding voice with sed converters COMBO, and also suitable for the exchanging with the unit COMBO digital words regarding signalling received from the switching matrix SMX over a PCM stream;

– a line card processor PRO-P suitable for receiving from the units SLIC information regarding the signalling, for the exchanging of said words with a signalling interface ISC-I, for the control of the operations performed by the unit LCU;

– a signalling interface ISC-I suitable for the configuration of the dital words in form of messages, coming from the unit PRO-P, and pertaining the signalling and for the forwarding and the receipt of said messages on the interprocessor signalling channel ISC-B.

According to what stated above, the digital words regarding voice are forwarded to the switching matrix SMX over the PCM-B bus once they have been assigned by the unit LCU to the time slot specified by the tine card processor PRO-P. The digital words pertaining the signalling are forwarded to the main system master computer SMC by the local interface ISC-I and the master interface ISC-I$_M$, which are so structured as to be able to exchange signalling messages.

The trunk line cards are not detailed as they are substantially similar to the analogic line cards, with the exception that, missing the units SLIC, they provide circuits for the detection/forwarding of signalling from/to another switching system.

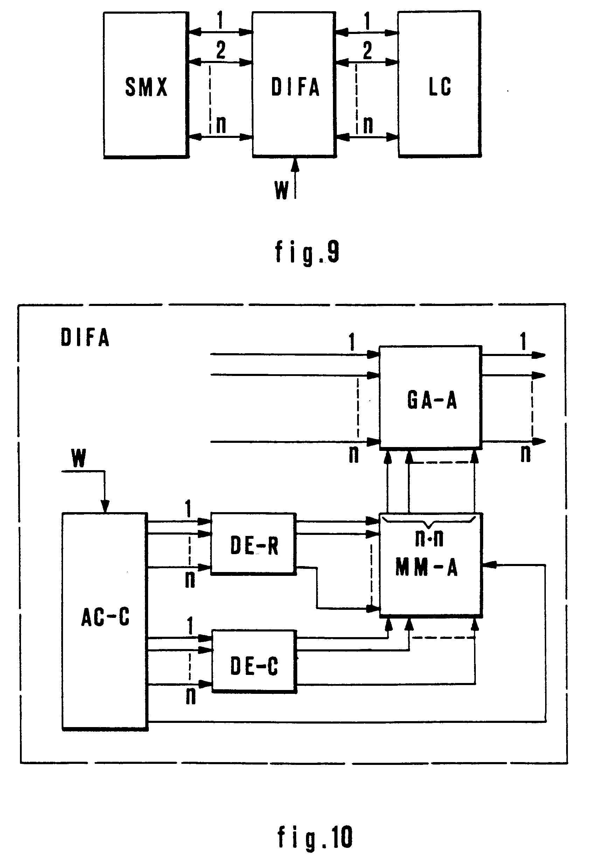

Fig. 9 shows the switching matrix SMX of fig. 1 along with the means DIFA, suitable for the spatial switching of the PCM channels in order to avoid any troubles which may arise when such a PABX system is installed and /or when a reconfiguration operation is required, for example when the number of the lines joined to the PABX unit are increased.

It is to remember that one or more data processing units may be integrated in said PABX units, which follow a custom-made basic configuration. The printed circuit boards necessary for the implementation of the minimum equipment, respectively for the implementation of the maximum equipment, may vary from a minimum to a maximum value equal to four times as the minimum value. According to a preferential embodiment, even the number of the cabinets for the allocation of said circuit boards may vary from one to four.

Considering that the PABX has a configuration strictly in accordance with the customer's requirements, it is impossible to provide a wiring suitable for any configuration. Missing the DIFA means, the wiring has to be arranged from time to time at the installation of the PABX system. The invention provides the connection of distribution means DIFA which are located among every set of line cards LC and the switching matrix SMX. Summing up, the invention provides the connection of every switching matrix's output to every set of line cards LC as well as the particular configuration required by the customer to be "personalized" through the means DIFA, which provides the distribution of the PCM stream once digital words are received. At the installation of the PABX, it is only necessary to pilot the configuration of DIFA means through the entering of digital words W, as better specified below referring to Fig. 10, which shows the block diagram of the DIFA means.

These means include:
– an access circuit AC-C suitable for the receipt at input a digital word W comprising a "line address field", a "column address field", a "information field" having at least a bit;
– a line address decoder DR-R, suitable for the activation of one of $n$ outputs in accordance with the binary configuration shown in the "line address field";
– a column address decoder DE-C, suitable for the activation of one of $n$ outputs in accordance to the configuration of "column address field";
– a set of memory units MM-A having a capacity equal to $n \cdot n$ bits, suitable for receiving at input the "informaton field" of said digital words and further suitable for storing it in the location determined by the line address decoder's DE-R output and by the column address decoder's DE-C output;
– a set of gate circuits GA-A, suitable for receiving at input $n$ PCM streams and further suitable for transmitting each group to at least one of $n$ output groups with reference to the $n \cdot n$ outputs state in the set of memory units MM-A.

The working of the above circuit arrangement is hereafter described. The access circuits AC-C are mainly constituted by a parallel - series converter which receives at input a digital word comprising $2n + 1$ bit. The $n$ line address bits and the $n$ column address bits are decoded by the units DE-R and DE-C which actuate an output (among the possible $n$ outputs) corresponding to the address received. The set of memory units MM-A is mainly constituted by $n \cdot n$ bistable circuits, so structured as to present a double qualification input (constituted by an output of the unit DE-R and by an output of the unit DE-C) and to receive at input said information bit, which is therefore stored by the bistable circuit, actuated in its turn by the units DE-R and DE-C.

Considering that every bistable circuit is associated to the corresponding gate circuit of the equipment GA-A, it results that connecting $n$ PCM streams to said equipment, these streams may be linked to one or more of the $n$ outputs determining the qualification of one or more gate circuits over the equipment MM-A.

According to what stated above, the PABX meets the requirements of the invention in the following way:
– the data processing units are directly connected to the PCM-B bus of the basic PABX configuration (see Fig. 2) and there are therefore no speed limitations which are instead present in configurations where the data processing units are connected to the PABX telephon line;
– the state of the data terminal's DT connector is transmitted to the processing unit by introducing, through means VI-M of Fig. 5, a violation in the stop bit and without using therefore key words;
– the installation and configuration operations may be easily performed over the means DIFA of Fig. 9 and 10 and only one loading operation of the digital words is required;
– the system master computer SMC is not subject to modifications of the remote units standard (for example the telephone set) due to the presence of the line card processors PRO-P (see Fig. 7).

Said units constitute in fact "intelligent" units distributed on the line card units LC and the modifications of the remote units can be therefore compensated by the line card processors without interesting the unit SMC.

## Claims

1. Digital Telephone Switching Exchange, particularly for private systems, comprising:
– a plurality of line card units (LC), to which telephone sets and/or data terminals and/or trunks are connected, suitable for the forwarding/receipt on a PCM highway (PCM-B) of digital words pertaining audio/data messages or signalling tones and further suitable to transmit/receive on an interprocessor signalling channel messages pertaining signalling criteria;
– a switching matrix (SMX) connected to said PCM highway and to a tone generators (TG);
– a system master computer (SMC) controlling the switching matrix (SMX) according to the signalling criteria received over the interprocessor signalling channel (ISC-B);
– at least a data processing unit (UE), using a data processing operating system and connected to said PCM highways and to a global bus (GLB-B) which is further linked to the system master computer;
characterized in that it comprises PCM interface means (PCM-I) each connected to a data processing unit (UE) and fit for extracting, respectively inserting, from/into said PCM highways (PCM-B) the digital words assigned, respectively coming, to/from the related data processing unit (UE) and fit for reconstruct a data flow at an averaged speed (V-I) between that one of the data terminal, by which they are generated, and that one of the PCM signals; said PCM interface means (PCM-I) comprising:
– a timing unit (TM) suitable for the generation at output of a first frequency clock ($CK_3$), having the same frequency of the PCM signals, a second fre-

quency clock ($CK_4$) having the said speed (V-I), a plurality of time signals ($f_1....f_{32}$), each of them presenting a duration equal to the corresponding time slot in a PCM signal;

– a speed converter (CCV) suitable for the receipt at input of said first and second clock ($CK_3$, $CK_4$) as well as the time signal ($f_i$) corresponding to the time slot where the words to be extracted/inserted are located, further suitable for the receipt at input of a bit stream at the PCM signal speed, respectively at the (V-I) speed, and suitable for the extraction, respectively insertion, from/into said PCM signal of digital words which are coincident with said time signal ($f_i$) as well as to generate at output a bit flow at the (V-I) speed, respectively at the PCM signal speed;

– an asynchronous receiver/transmitter unit (UART) suitable for the forwarding, respectively receiving, to/from the speed converter (CCV) of a bit flow, at the (V-I) speed, which contains asynchronous digital words, which are in their turn adapted to eliminate, respectively to insert, from/into said digital words at least one start and one stop bit, and fit to generate, respectively to receive, in parallel form, sets of bits and further fit to generate an interruption request (int) after having received a digital word at least;

– a microprocessor ($\mu P_1$) suitable for the extraction of digital words, in parallel form, from said asynchronous receiver/transmitter unit (UART) in response to the interruption request, further suitable for the forwarding to the asynchronous receiver / transmitter unit (UART) of bits presenting a fixed logic value all the time during which no digital words are coming from the data processing unit (UE) and further adapted to interrupt the generation of said fixed logic value bit when a digital word is received from the processing unit (UE).

2. Telephone exchange as claimed in claim 1, characterized in that said speed converter (CCV) comprises:

– a first register "Serial In-Parallel Out" (SI-PO₁), having its input connected to said PCM highways (PCM-B), which receives said first clock ($CK_3$);

– a first register "Parallel In-Serial Out" (PI-SO₁) suitable to store the content of said first register (SI-PO₁) when the second edge of said temporal gate ($f_1$) is received;

– a second register "Serial In-Parallel Out" (SI-PO₂), having the input connected to the UART unit's output, which receives said second clock ($CK_4$);

– a second register "Parallel-In-Serial Out" (PI-SO₂), adapted to store the content of said second register (SI-PO₂) when the first edge of said time slot ($f_i$) is received.

3. Telephone exchange as claimed in claim 1, characterized in that said voice data terminals comprise digital telephone sets (DI-T) comprising:

– voice handling means (MTF) converting analogic signals into digital signals;

– data handling means (MT-D) forwarding a fixed logic bit to the telephone line (L) when no data are generated by a data terminal (DT) connected to said digital telephone set (DI-T), interrupting the sending of said fixed logic bit in response to the receipt of a digital word coming from said data terminal (DT) associating at least a start and a stop bit to said digital word, and forwarding the obtained character to the telephone line (L) by locating it in a predetermined time slot in two or more consecutive frames of a PCM transmission system;

– line means (MLN), suitable for the generation-/receipt on the telephone line (L) of digital words issued either by the voice handling means (MTF) or by the data handling means (MTD) after having associated bits pertaining the signalling to said digital words.

4. Telephone exchange as claimed in claims 1 and 3, characterized in that either the PCM interface means (PCM-I) or the digital telephone sets (DI-T) include violating means (VI-M) suitable for the introduction of a violation signal into the polarity of the stop bit whenever the transmission of a digital word pertaining a service information is required.

5. Telephone exchange as claimed in claims 1 and 3, characterized in that a digital line card (D-LC), belonging to said line card units comprises:

– a plurality of line means ($UDLT_1$),....,($UDLT_K$) suitable for the message transfer with the line means located on the digital telephone sets (DI-T) and further suitable to let available the voice/data bits at a first output and the signalling bits at a second output;

– local communication means (LCU) suitable to receive from the line means (UDLT) the voice / data bits and to forward them to the PCM highways (PCM-B) after their allocation in predetermined time slots of a PCM system and further suitable for the forwarding of digital words pertaining the signalling tones to the line means (UDLT);

– a line card processor (PRO-P) suitable to control the local communication means (LCU) and further suitable to receive from the line means (UDLT) the signalling bits and for forwarding them to the interprocessor signalling channel (ISC-B) through a signalling interface (ISC-I).

6. Telephone exchange claimed as in claim 1, characterized in that said system master computer (SMC) may comprise:

– a master signalling interface (ISC-$I_M$) designated to exchange messages with the signalling interface urits (ISC-I) located in the line card units (LC);

– a main processor (PRO-C) suitable to receive signalling messages from the master signalling interface (ISC-I$_M$), to control the switching matrix (SMX) by means of the local bus (LOC-B), to exchange messages with the data processing units (UE) over a global bus GLB-B.

7. Telephone exchange claimed as under claim 1, characterized in that it includes distribution means (DIFA), designated to connect any of the switching matrix outputs (SMX) to any of the line card units (LC), in response to the receipt of a control word (W).

8. Telephone exchange as in claim 7, characterized in that said distribution means (DIFA) provide the presence of the following elements:

– an access circuit (AC-C), suitable for the receipt at input of a digital word (W), including a "line address field", a "coloumn address field", an "information field" having a bit at least;

– a line address decoder (DE-R), suitable to activate one of the n outputs referring to the configuration specified in "line address field";

– a coloumn address decoder (DE-C), suitable to activate one of the n outputs referring to the configuration specified in "coloumn address field";

– a set of memory units (MM-A), having a capacity equal to n . n bit, suitable to receive at input the "information field" of said digital word and furter suitable to store it in the location defined by the line address decoder's output (DE-R) and by the coloumn address decoder's output (DE-C);

– a set of gate circuits (GA-A), suitable to receive at input n PCM streams and further suitable to send the content of each stream to at least one of n output streams in accordance with the n . n outputs state in the memory units (MM-A).

9. Telephone exchange as in claim 1, characterized in that said PCM interface means (PCM-I) include a voice unit (VOI-U), which answers to a qualification signal (abi$_1$) generated by a microprocessor (µP) by providing the location of the digital words received at input into a predetermined time slot of the PCM highways (PCM-B).


## Patentansprüche

1. Digitale Umschalt-Telephonzentrale, besonders für private Anlagen, umfassend:

– eine Mehrzahl von Leitungskarteneinheiten (LC), mit denen Fernsprechgeräte und/oder Datenterminale u/o Verbindurgskreise verbunden sind, geeignet für die Weiterleitung/den Empfang auf einem PCM-Bus (PCM-B) von Digitalwörtern entsprechend den Sprech-/Datenmeldungen oder Signaltönen und ferner geeignet für die Uebertragung/den Empfang auf einem Zwischenprozessor-Signalkanal (ISC-B) von Meldungen betreffend den Signalkriteria.

– eine Umschaltmatrix (SMX), mit dem obengenannten PCM-Bus und mit einem Tongenerator (TG) verbunden;

– einen System-Mastercomputer (SMC), zur Steuerung und Regelung der Umschaltmatrix (SMX) entsprechend der Signalkriteria, welche über der Zwischenprozessor-Signalkanal (ISC-B) erhalten werden;

– mindestens eine Datenverarbeitungeinheit (UE), die ein Datenverarbeitungssystem verwendet und mit dem obengenannten PCM-Bus und mit den Globalbus (GLB-B) verbunden ist, der ferner mit dem System-Mastercomputer angeschlossen ist;

von der Tatsache genkennzeichnet, daß die Einheit PCM-Schnittstellenmittel (PCM-I) umfaßt, derer jeder mit einer Datenverarbeitungseinheit (UE) verbunden ist, und für das Herausnehmen bzw. Einfügen aus dem / in den genannten PCM-Bus (PCM-B) der Digitalwörter geeignet, die für die entsprechende Datenverarbeitungseinheit (UE) bestimmt sind oder von der entsprechenden Datenverarbeitungseinheit (UE) kommen, und für die Wiederherstellung des Datenflusses bei einer Geschwindigkeit (V-I) geeignet, die zwischen der Geschwindigkeit der Datenterminale, von denen sie erzeugt werden, und der der PCM-signale zwischenliegt; die genannten PCM-Schnittstellenmittel (PCM-I) umfassen:

– eine Zeiteinheit (TM), geeignet für die Erzeugung am Ausgang eines ersten Frequenzclock (CK$_3$), mit derselben Frequenz der PCM-Signale, eines zweiten Frequenzclock (CK$_4$) mit derselben Geschwindigkeit (V-I), einer Mehrzahl von Zeitsignalen (f$_1$ ... f$_{32}$), jedes derer eine Dauer gleich dem entsprechenden Zeitkanal in einem PCM-Signal aufweist;

– einen Geschwindigkeitsumformer (CCV), geeignet für den Empfang am Eingang der ober genannten ersten und zweiten Clock (CK$_3$, CK$_4$), sowie der Zeitsignale (f$_1$)entsprechend dem Zeitkanal, wo die auszunehmenden/einzufügenden Wörter liegen, ferner geeignet für den Empfang am Eingang eines Bit-Flusses bei der PCM-Signalgeschwindigkeit, bzw. bei der (V-I) Geschwindigkeit, und geeignet für das Herausnehmen aus dem PCM-fluss bzw. Einfügen in den PCM-fluss der Digitalwörter, die dem genannten Zeitsignal (f$_1$) entsprechen, ferner für die Erzeugung am Ausgang eines Bitflusses bei der (V-I) Geschwindigkeit bzw. bei der Geschwindigkeit des PCM-Signals;

– eine asynchrone sende und Empfangseinheit (UART), geeignet für die Weiterleitung bzw. für den Empfang, zu/von dem Geschwindigkeitsumformer (CCV) von einem Bitfluss bei der (V-I) Geschwindigkeit welche asynchrone Digitalwörter enthält, die geeignet sind, von den genannten Digitalwörtern mindestens einen Start- und einen Stopbit zu unterdrücken bzw. in die genannten Digitalwörter einzufügen, und geeignet, Bitserien in Parallelform zu erzeugen bzw. zu empfangen, und ferner geeignet, eine Unterbrechungsanfrage (int) zu erzeugen, nachdem sie mindestens ein Digitalwört empfangn hat;

– einen Mikroprozessor ($\mu P_1$), geeignet für das Herausnehmen von Digitalwörtern in Parallelform aus der genannten asynchronen Sende- und Empfangseinheit (UART) zur Beantwortung der Unterbrechungsanfrage, ferner geeignet für die Weiterleitung zu der asynchronen Sende- und Emp fangseinheit (UART) von Bits welche einen festen logischen Wert aufweisen, während der ganzen Dauer in der keine Digitalwörter von der Datenverarbeitungseinheit (UE) kommen, und ferner geeignet zur Unterbrechung der Erzeugung von ganannten Bit mit festem logischem Wert wenn ein Digitalwort von der Verarbeitungseinheit (UE) empfangen wird.

2. Telephonzentrale wir in Anspruch 1 von der Tatsache gekennzeichnet, daß der genannte Geschwindigkeitsumformer (CCV) folgendes umfaßt:

– ein erstes Register "Serial In - Parallel Out" (SI-$PO_1$) dessen Eingang mit dem genannten PCM-Bus (PCM-B) verbunden ist, das den genannten ersten Clock ($CK_3$) empfängt;

– ein erstes Register "Parallel In Serial Out" (PI-$SO_1$) dazu geeignet den Inhalt des genannten ersten Registers (SI-$PO_1$) zu speichern wenn der zweite Rahmen des genannten Zeittors-kanals ($f_1$) empfangen ist;

– ein zweites Register "Serial In Parallel Out" (SI-$PO_2$), dessen Eingang mit dem Ausgang der UART-Einheit verbunden ist, das den genannten zweiter Clock ($CK_4$) erhält;

– ein zweites Register "Parallel In - Serial Out" (PI-$SO_2$), dazu geeignet, den Inhalt des genannten zweiten Registers (SI-$PO_2$) zu speichern, wenn der erste Rahmen des genagnten Zeitkanals ($f_1$) empfangen ist.

3. Telephonzentrale, wie im Anspruch 1, von der Tatsache gekennzeichnet, daß die genannten Sprechdatenterminal digitale Fernsprechgeräte (DI-T) mit folgenden Teilen umfassen:

– Sprecherarbeitungsmittel (MTF) zur Umwandlung der Analogsignale in Digitalsignale;

– Datenararbeitungsmittel (MT-D) zur Weiterleitung eines festen logischen Bit an die Fernsprechleitung (L), wenn keine Daten von einem Datenterminal (DT) erzeugt sind das mit dem genannten digitalen Fernsprechgerät (DI-T) angeschlossen ist zur Unterbrechung der Sendung von den genannten festen logischen Bits zur Beantwortung auf den Empfang eines Digitalwortes aus dem genannten Datenterminal (DT) zur Zuordnung mindestens eines Start- und eines Stopbits zu dem genannten Digitalwort, und zur Weiterleitung des erhaltenen Charakters an die Fernsprechleitung (L), indem er in einen vorgegebenen Zeitkanal in zwei oder mehrerer aufeinanderfolgenden Rahmen von einem PCM-Uebertragungssystem gelegt wird.

– Leitungsmittel (MLN), geeignet zu Erzeugung/Empfang auf der Fernsprecheitung (L) von Digitalwörtern, die sowohl von den Sprecherarbeitungsmitteln (MTF) als auch von den Datenerarbeitungsmitteln (MTD) geliefert werden, nachdem Signalbits zu den genannten digitalen Wörtern zugeordnet worden sind.

4. Telephonzentrale, wie in den Ansprüchen 1 und 3, von der Tatsache gekennzeichnet daß sowohl die PCM-Schnittstellenmittel (PCM-I) als auch die digitalen fernsprechgeräte (DI-T) Verletzungsmittel (VI-M) einschliessen, die dazu geeignet sind, ein Verletzungssignal in die Polarität des Stopbits einzufügen, wenn die Uebertragung von einem Digitalwort betreffend eine Betriebsinformation verlangt wird.

5. Telephonzentrale wie in den Ansprüchen 1 und 3, von der Tatsache gekennzeichnet, daß eine digitale Leitungskarte (D-LC) den genannten Leitungskarteneinheiten angehörend, folgendes umfassen:

– eine Mehrzahl von Leitungsmitteln ($UDLT_1$), .... ($UDLT_K$), geeignet für die Meldungsübertragung mit den Leitungsmitteln, die sich in den digitalen Fernsprechgeräten (DI-T) befinden, und ferner dazu geeignet die Sprech/Datenbits auf dem ersten Ausgang und die Signalbits auf dem zweiten Ausgang zur Verfügung zu stellen;

– lokale Verkehrsmittel (LCU), dazu geeignet, von den Leitungsmitteln (UDLT) die Sprech-/Datenbits zu empfangen und sie zu dem PCM-Bus (PCM-B) weiterzuleiten nachdem sie in vorgegebene Zeitkanäle von einem PCM-System gelegt worden sind, und ferner dazu geeignet Digitalwörter betreffend die Signaltöne an die Leitungsmittel (UDLT) weiterzuleiten.

– einen Leitungskarteprozessor (PRO-P), geeignet für die Steuerung und Regelung der lokalen Verkehrsmittel (LCU) und ferner dazu geeignet, von den Leitungsmitteln (UDLT) die Signalbits zu empfangen und zur Weiterleitung derer an das Zwischenprozessor Signalkanal (ISC-B) durch eine Signalschnittstelle (ISC-I).

6. Telephonzentrale, wie im Anspruch 1, von der Tatsache gekennzeichnet, daß im genannten System-Mastercomputer (SMC) folgendes enthalten ist:

– eine Master-Signalschnittstelle ($ISC-I_M$) geeignet zum Meldungsaustauch mit den Signal-Schnittstelleneinheiten (ISC-I), die sich in den Leitungskarteneinheiten (LC) befinden;

– ein Hauptprozessor (PRO-C), dazu geeignet, von der Master-Signalschnittstelle ($ISC-I_M$) Signalmeldungen zu empfangen, die Umschaltmatrix (SMX) durch den Likalbus (LOC-B) zu steuern, Meldungen mit den Datenverarbeitungseinheiten (UE) durch einen Globalbus GLB-B auszutauschen.

7. Telephonzentrale, wie im Anspruch 1, von der Tatsache gekennzeichnet, daß sie Verteilungsmittel (DIFA) umfaßt, welche zur Verbindung jeglichen Ausgangs von der Umschaltmatrix (SMX) mit jeglicher Leitungskarteneinheit (LC) bestimmt sind, zur Beantwortung auf der Empfang eines Steuerwortes (W).

8. Telephonzentrale, wie im Anspruch 7, von der Tatsache gekennzeichnet, daß die genannten Verteilungsmittel (DIFA) das Vorhandensein der folgenden Elemente vorsehen:
– eines Zugangskreises (AC-C), geeignet für den Empfang auf dem Eingang von einem Digitalwort (W), das ein "Linien-Adressenfeld" ein "Spalten-Adressenfeld", ein "Informationsfeld" mit mindestens einem Bit einschließt;
– eines Linien-Adressendekoders (DE-R), dazu geeignet, eine von den n - Ausgängen betreffend die Konfiguration zu aktivieren, die im "Linienadressfeld" angegeben wird;
– eines Spalten-Adressendekoders (DE-C), dazu geeignet, einen von den n - Ausgängen betreffend die Konfiguration zu aktivieren, die im "Spaltenadressenfeld" angegeben wird;
– einer Gruppe von Speichereinheiten (MM-A), die eine Kapazität gleich n. n-bit aufweisen, dazu geeignet, am Eigang das "Informationsfeld" des genannten Digitalwortes zu empfangen, und ferner dazu geeignet, es is der Lage zu speichern, die vom Ausgang des Linienadressendekoders (DE-R) und vom Ausgang des Spaltenadressendekoders (DE-C) festgelegt wird;
– einer Gruppe von Torkreisen (GA-A), dazu geeignet am Eingang n-PCM-Flüsse zu empfangen, und ferner geeignet, den Inhalt jedes Flusses zu mindestens einem von n Ausgangsflüssen zu senden, entsprechend dem Zustand von n. n-Ausgängen in den Speichereinheiten (MM-A).

9. Telephonzentrale, wie im Anspruche 1, von der Tatsache gekennzeichnet, daß die genannten, PCM-Schnittstellenmittel (PCM-I) eine Sprecheinheit (VOI-U) Umfassen, die auf ein Qualifikationssignal ($abi_1$) antworten, das von einem Mikropozessor ($\mu$P) erzeugt wird, indem sie die Lage der Digitalwörter festlegt, die am Eigang in einem vorgegebenen Zeitkanal des PCM-Bus (PCM-B) empfangen worden sind.

## Revendications

1. Central télélephonique de commutation du type digital, spécialement conçu pour les installations particulières, comprenant:

– une pluralité d'unités à carte de ligne (LC), auxquelles sont connectés des appareils téléphoniques et/ou des terminaux de données et/ou des voies principales, conçues pour l'émission/réception sur un bus PCM (PCMB) de mots numériques ayant rapport aux messages de phonie/données ou les tonalités de signalisation, ainsi que pour l'émission/réception sur une voie de signalisation de l'interprocesseur des messages ayant rapport aux critères de signalisation;
– une matrice de commutation (SMX) connectée audit bus PCM et à un générateur de tonalités (TG);
– un ordinateur principal du système (SMC) qui commande la matrice de commutation (SMX) conformément aux critères de signalisation reçus sur la voie di signalisation de l'interprocesseur (ISC-B);
– au moins une unité de traitement de données (UE) utilisant un système de traitement du type informatique, connectée auxdits bus PCM ainsi qu'à un bus global (GLB-B) qui est aussi relié à l'ordinateur principal du système; caractérisé par le fait qu'il comprend des moyens d'interface PCM (PCM-1), chacune d'eux étant connecté à une unité de traitement de données (UE) et en mesure d'extraire du ou d'introduire dans lesdits bus PCM (PCM-B) les mots digitaux attribués provenant de ou parvenant à l'unité de traitement de données correspondante (UE), et en état de reconstituer un flux de données à la vitesse (V-I) qui est la moyenne de la vitesse du terminal de données qui les engendre et la vitesse des signaux PCM; lesdits moyens d'interface PCM (PCM-I) comprennent:
– une unité de synchronisation (TM) en mesure d'émettre à sa sortie un premier horloge à fréquence ($CK_3$) dont la fréquence est égale à celle des signaux PCM, un deuxième horloge à fréquence ($CK_4$) ayant ladite vitesse (V-I), une pluralité de signaux d'horloge ($f_1$....$f_{32}$), chacun deux de durée égale à celle du canal de temps correspondant d'un signal PCM;
– un convertisseur de vitesse (CCV) en mesure de recevoir à son entrée ledit premier et deuxième horloge ($CK_3$, $CK_4$), ainsi que le signal d'horloge ($f_i$) correspondant au canal de temps où se trouventt les mots à extraire ou à introduire, également en état de recevoir à son entrée un flot de bits à la vitesse du signal PCM, au bien à la vitesse (V-I), ainsi que d'extraire de ou d'introduire dans ledit signal PCM les mots digitaux coïncidant avec ledit signal d'horloge ($f_1$), et pareillement en mesure d'émettre à sa sortie un flot de bits à la vitesse (V-I) ou bien à la vitesse du signal PCM;
– une unité d'émission/réception asynchrone (UART) en mesure de transmettre à ou de recevoir du convertisseur de vitesse (CCV) un flot de bits, à la vitesse (V-I), contenant des mots digitaux asynchrones qui à leur tour sont en état d'éliminer de ou d'intercaler dans lesdits mots digitaux au moins un bit de départ et un bit d'arrêt, ainsi que d'émettre et de recevoir, sous forme parallèle, des paquets de bits, et pareillement d'émettre une requête d'interruption (int) après la réception d'au moins un mot digital;

– un microprocesseur ($\mu P_1$) en mesure d'extraire les mots digitaux, sous forme parallèle, de ladite unité d'émission/réception asynchrone (UART) en réponse à la requête d'interruption, également en état de transmettre à l'unité d'émission/réception asynchrone (UART) des bits présentant une valeur logique fixe pendant tout le temps où aucun mot digital ne provient de l'unité de traitement de données (UE), ainsi que d'interrompre l'émission dudit bit à valeur logique fixe lorsque un mot digital lui parvient de l'unité de traitement (UE).

2. Central téléphonique comme il est décrit à la revendication 1, caractérisé par le fait que ledit convertisseur de vitesse comprend:

– un premier registre "Série à l'entrée-Paralléle à la sortie" (SI-$PO_1$), dont l'entrée est connectée auxdits bus (PCM-B), qui reçoit ledit premier horloge ($CK_3$);

– un premier registre "Parallèle à l'entrée - série à la sortie" (PI-$SO_1$), en mesure d'enregistrer en mémoire le contenu dudit premier registre (SI-$PO_1$) lorsque il reçoit le deuxième bord dudit signal d'horloge ($f_1$);

– un deuxième registre "Série à l'entrée - Parellèle à la sortie (SI-$PO_2$), dont l'entrée est connectée à la sortie de l'unité UART, qui reçoit ledit deuxième horloge ($CK_4$);

– un deuxième registre "Parallèle à l'entrée - Série à la sortie (PI-$SO_2$), en mesure d'enregistrer en mémoire le contenu dudit deuxième registre (SI-$PO_2$) lorsque il reçoit le premier bord dudit canal de temps ($f_1$).

3. Central téléphonique comme il est décrit à la revendication 1, caractérisé par le fait que lesdits terminaux de données/de phonie comprennent des appareils téléphoniques digitaux (DI-T) incluant:

– moyens de manipulation de la phonie (MTF) pour la conversion de signaux analogiques en signaux digitaux;

– moyens de manipulation des données (MT-D) pour la transmission d'un bit logique fixe à la ligne téléphonique (L) lorsque un terminal de données (DT) connecté audit appareil téléphonique digital (DI-T) n'émet aucune donnée, l'interruption de l'envoi dudit bit logique fixe en réponse à la réception d'un mot digital provenant dudit terminal de données (DT), l'association audit mot digital d'au moins un bit de départ et un bit d'arrêt, et l'envoi du caractère ainsi obtenu à la ligne téléphonique (L) en l'attribuant à un canal de temps préétabli en deux ou plusieurs trames consécutives d'un système de transmission PCM;

– moyens de ligne (MLN) en mesure de transmettre/recevoir sur la ligne téléphonique (L) les mots digitaux émis soit par les moyens de manipulation de la phonie (MTF), soit par les moyens de manipulation des données (MTD) après avoir associé auxdits mots digitaux les bits ayant rapport à la signalisation.

4. Central téléphonique comme il est décrit aux revendications 1 et 3, caractérisé par le fait que soit les moyens d'interface PCM (PCM-1), soit les appareils téléphoniques digitaux (DI-T) comprennent des moyens de violation (VI-M) aptes à l'introduction d'un signal de violation dans la polarité du bit d'arrêt chaque fois qu'il faut transmettre un mot digital ayant rapport à une information de service.

5. Central téléphonique comme il est décrit aux revendications 1 et 3, caractérisé par le fait qu'une carte de ligne digitale (D-LC) faisant partie desdites unités à carte de ligne comprend:

– une pluralité de moyens de ligne ($UDLT_1$),...,($UDLT_k$) aptes ) dialoguer avec les moyens de ligne prévus dans les appareils téléphoniques digitaux (DI-T), également en mesure de fournir les bits de phonie/données sur une première sortie et les bits de signalisation sur une deuxième sortie;

– moyens de transmission locale (LCU) aptes à recevoir les bits de phonie/données provenant des moyens de ligne (UDLT) et les envoyer aux bus PCM (PCM-B) après les avoir attribués à des canaux de temps préétablis d'un système PCM, également aptes à la transmission aux moyens de ligne (UDLT) de mots digitaux ayant rapport aux tonalités de signalisation.

– un processeur à carte de ligne (PRO-P) en mesure de controler les moyens de transmission locale (LCU), ainsi que de recevoir les bits de signalisation provenant des moyens de ligne (UDLT) et les transmettre à la voie de signalisation de l'interprocesseur (ISC-B) à travers une interface de signalisation (ISC-I).

6. Central téléphonique comme il est décrit à la revendication 1, caractérisé par le fait que ledit ordinateur principal du système (SMC) peut inclure:

– une interface principale de signalisation (ISC-$I_M$) conçue pour dialoguer avec les unités d'interface de signalisation (ISC-I) situées dans les unités à carte de ligne (LC);

– un processeur principal (PRO-C) en mesure de recevoir les messages de signalisation provenant de l'interface principale de signalisation (ISC-$I_M$), de commander la matrice de commutation (SMX) au moyen du bus local (LOC-B), de dialoguer avec les unités de traitement de données (UE) au moyen d'un bus global GLB-B

7. Central téléphonique comme il est décrit à la revendication 1, caractérisé par le fait qu'il inclut des moyens de répartition (DIFA) conçus pour connecteur n'importe quelle sortie de la matrice de commutation (SMX) à n'importe quelle unité à carte de ligne (LC), enréponse à la réception d'un mot de commande (W).

8. Central téléphonique comme il est décrit à la revendication 7, caractérisé par le fait que lesdits moyens je répartition (DIFA) prévoient la présence des éléments suivants:

   – un circuit d'accès (AC-C) en mesure de recevoir à son entrée un mot digital (W) incluant un champ "adresse de ligne", un champ "adresse de colonne", un champ "d'information" qui ait au moins un bit;

   – un décodeur d'adresse de ligne (DE-R), en mesure d'activer une des $n$ sorties ayant rapport à la configuration spécifiée dans le "champ d'adresse de ligne";

   – un décodeur d'adresse de colonne (DE-C), en mesure d'activer une des $n$ sorties ayant rapport à la configuration spécifiée dans le "champ d'addresse de colonne";

   – un ensemble d'unités de mémoire (MM-A) avec une capacité égale à n . n bits. en mesure de recevoir à son entrée le "champ d'information dudit mot digital et de l'enregistrer en mémoire dans l'attribution définie par la sortie du décodeur d'adresse de ligne (DE-R) et par la sortie du décodeur d'adresse de colonne (DE-C);

   – un ensemble de circuits porte (GA-A), aptes à recevoir à leur entrée $n$ flots PCM, ainsi qu'à envoyer lecontenu de chaque flot à au moins un des $n$ flots de sortie, conformément à l'état des sorties n . n dans les unités de mémoire (MM-A).

9. Central téléphonique comme il est décrit à la revendication 1, caractérisé par le fait que lesdits moyens d'interface PCM (PCM-I) comprennent une unité de phonie (VOI-U) qui répond à un signal de validation (abi$_1$) émis par le microprocesseur ($\mu$P) en attribuant à un canal de temps préétabli des bus PCM (PCM-B) les mots digitaux parvenant à son entrée.

fig.1

fig.2

fig.3

fig. 4

fig.5

fig.6

fig.7

fig.8

fig.9

fig.10